# EUROPEAN PATENT SPECIFICATION

(11) **EP 2 536 252 B1**
(45) Date of publication and mention of the grant of the patent: **23.08.2017**
(21) Application number: 11181731.8
(22) Date of filing: 19.09.2011
(51) Int. Cl.: H05B 33/08

(54) **Lighting apparatus and lighting controlling method**
Beleuchtungsvorrichtung und Beleuchtungssteuerungsverfahren
Appareil d'éclairage et procédé de contrôle d'éclairage

(30) Priority: 15.06.2011 KR 20110057818
(43) Date of publication of application: 19.12.2012
(73) Proprietor: LG Electronics Inc., Seoul 150-721 (KR)
(72) Inventor: Watanabe, Takuya, Kanagawaken (JP); Kim, Namjin, 153-802 Seoul (KR); Kim, Hyunha, 153-802 Seoul (KR)
(74) Representative: Vossius & Partner Patentanwälte Rechtsanwälte mbB

(56) References cited:
- WO-A1-2011/045057
- WO-A2-2010/035155

## Description

The present invention relates to a lighting control method, a lighting apparatus and a lighting system.

In the lighting industry, studies and researches have been still under development on a lighting source, a light emission type and a driving method of a lighting apparatus.

A conventional lighting system generally uses a lighting source such as an incandescent lamp, an electric discharge lamp and a fluorescent lamp for a household, landscape and industrial usage. Here, a resistive lighting source including the incandescent lamp has a low efficiency and a heat generation problem. The electric discharge lamp has problems of a high price and a high voltage. The fluorescent lamp has an environmental disadvantage of mercury usage.

To overcome disadvantages of those lighting sources, there have been increasing interests in a light emitting diode (LED) having advantages of light-emitting efficiency, color variety and design autonomy. There have been increasing studies and researches on a lighting system including the LED as lighting source.

The LED is a semiconductor element which emits a light when a voltage is applied thereto forwardly. The LED has a long usage life, low power consumption, with electrical, optical and physical properties which are proper to mass production and the LED has been rapidly replacing the incandescent lamps and fluorescent lamps.

Generally, a lighting apparatus uses commercial Alternative Current (AC) power lines as electricity supply source. As a result, a lighting apparatus having the LED as lighting source has to be operated by the commercial AC power lines, too.

A conventional lighting apparatus having the conventional incandescent lamp as lighting source controls luminosity of the incandescent lamp, namely, dimming by using a dimmer. A phase control dimmer using a triode AC switch (e.g., TRIAC) is generally used as the dimmer. The phase control dimmer uses the TRIAC to be controlled and switched on at a predetermined phase angle of a voltage waveform of the commercial AC power and it converts the on-phase angle to control dimming freely.

Relating to that, the phase control dimmer is used to control the dimming of the LED lighting apparatus. Here, the LED lighting apparatus generally rectifies the input commercial AC power and controls a smoothing capacitor with a high capacity to suppress variation of the power voltage after that. As a result, even when the phase control dimmer lowers the input commercial AC power to control dimming, the smoothing capacitor stores sufficient electric charge for the LED to be luminous and it controls currents of the LED to be uniform. Because of that, the dimming required by the phase control dimmer is not controlled. In other words, the dimming of the LED is not lowered in the LED lighting apparatus as much as the dimming controlled by the phase control modulator, compared with the incandescent lamp lighting apparatus. WO 2010/035155 A2 represents an example of such conventional technology.

An object of the present invention is to provide a lighting control method, and a lighting apparatus, which can reduce flicker generated by input voltages in a lighting control process and which can reduce power consumption. To achieve this objects, the invention provides a lighting apparatus as specified in claim 1 and a method according to claim 10.

According to the present invention, there may be following effects.

First, the dimmer can be operated normally even in the lighting system using the LED as lighting source. Because of that, lighting may be controlled by using the dimmer effectively.

Second, flickering which might be generated in the lighting apparatus by input voltages may be reduced effectively.

Third, power consumption of the lighting apparatus generated by the input voltages may be reduced effectively.

It is to be understood that both the foregoing general description and the following detailed description of the present invention are exemplary and explanatory and are intended to provide further explanation of the invention as claimed.

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 is a diagram illustrating a perspective view illustrating a lighting apparatus according to an embodiment of the present invention;
FIG. 2 is a diagram illustrating a lighting system according to an embodiment of the present invention;
FIG. 3 is a diagram illustrating a lighting system according to another embodiment of the present invention;
FIG. 4 is a diagram illustrating a lighting system according to a further embodiment of the present invention;
FIG. 5 is a diagram illustrating a lighting system according to a still further embodiment of the present invention;
FIG. 6 is a diagram illustrating a bias controlling circuit shown in FIGS. 2 through 5 according to an embodiment and a detailed circuit configuration of the bias circuit;
FIG. 7 is a diagram illustrating a circuit configuration of a bias controlling circuit according to another embodiment of the present invention;
FIG. 8 is a diagram illustrating a circuit configuration of a bias controlling circuit according to a further embodiment of the present invention;
FIG. 9 is a diagram illustrating a buck type lighting system according to an embodiment of the present invention;
FIGS. 10 and 11 are diagrams illustrating a buck-booster type lighting system according to an embodiment of the present invention; and
FIG. 12 is a diagram illustrating a relationship among a conduction phase angle of the dimmer, an output voltage of the bias controlling circuit, a voltage rectified and smoothed from a third coil (T3) of a transformer and a bias circuit current according to an embodiment of the present invention.

Embodiments of the present invention will be described in reference to the accompanying drawings.

Suffixes of elements used in following description "module" and "part" are given, considering convenience of description used in the specification. The "module" and "part" may be used combinedly.

Furthermore, embodiments of the present invention will be described in detail in reference to the accompanying drawings and contents disclosed in the drawings and the present invention is not limited to the embodiments.

Reference will now be made in detail to the specific embodiments of the present invention, examples of which are illustrated in the accompanying drawings. Wherever possible, the same reference numbers will be used throughout the drawings to refer to the same or like parts.

It will be understood that expressions including ordinal numbers such as "first" and "second" are used to refer to various elements. The elements are not limited to the ordinal numbers and the expressions are used only for distinguish one element from the others.

As follows, a lighting control method, a lighting apparatus implanting the lighting control method and a lighting system including the lighting apparatus will be described in reference to the accompanying drawings.

Especially, there will be described in detail a lighting control method, a lighting apparatus and a lighting system including the lighting apparatus, which can reduce flicker generated by input voltages in a lighting control process and which can reduce power consumption.

"A lighting apparatus" described in the present disclosure commonly refers to an apparatus which can emit a light generated from a light emitting diode (LED) used as lighting source, not from the conventional incandescent or fluorescent lamp. Especially, the lighting apparatus according to the present invention may include a variety of types including a bulb type, a flat type, and parabolic aluminized reflector (PAR) type. As follows, the bulb type will be embodied to realize the present invention to help the present invention to be understood.

In addition, "dimmer or light controller" used in the present disclosure includes all of lighting control means for controlling the lighting apparatus. Especially, a TRIAC phase control dimmer is embodied to realize the device which controls dimming of the lighting apparatus according to the present invention.

Here, the scope of the present invention should not be limited by the embodiments or embodiments which will be described and but by the appended claims of the disclosure.

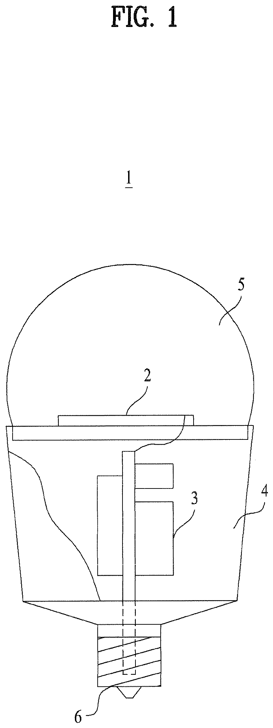

FIG. 1 is a perspective view illustrating a lighting apparatus according to an embodiment of the present invention.

As mentioned above, the lighting apparatus 1 according to the embodiment of the present invention uses the LED with low power consumption, long usage life and eco-friendliness as lighting source currently, instead of the conventional incandescent lamp.

In reference to FIG. 1, the lighting apparatus 1 according to the present invention includes a LED module 2 having a plurality of LED chips, a driving circuit 3 for controlling driving of the LED module 2, a case 4 for accommodating the LED module 2 and the driving circuit 3, to radiate heat generated from the LED module 2, a cover 5 for protecting the LED module 2 and for transmitting a light irradiated from the LED module 2, and a base 6. Here, the lighting apparatus 1 according to this embodiment of the present invention may further include a heat sink (not shown) to absorb and sink the heat generated from the LED module 2. The heat sink may be arranged in a predetermined region, for example, between the case 4 and the LED module 2 to radiate the heat generated from the LED module 2 more effectively.

The LED module 2 is formed on a metal based printed circuit board (PCB) or ceramic substrate, with an insulation layer, and the plurality of the LED chips may be mounted on the LED module 2. Such the LED module 2 selects the number of serial and/or parallel connections of the LED chips properly to set driving voltages and/or driving currents.

The driving circuit 3 is connected with the base 6 and it transports an external power supplied via the base 6 to the LED module 2 via a lead wire, to control the driving of the LED module 2. For example, the external power may be a commercial power line, especially a commercial Alternative Current (AC) power and it may be 110V or 220V. Here, the present invention is not limited thereto and all of commercial AC power lines used domestically or internationally may be applicable to the present invention. The driving circuit 3 rectifies the input AC power, to convert it into a Direct Current (DC) power. After that, the driving circuit 3 transforms the DC power to be proper to the driving of the LED module 2 and it supplies the transformed power to the LED module 2.

As follows will be described various configurations and embodiments of a lighting system including the lighting apparatus 1 described in reference to FIG. 1 according to the present invention.

A lighting apparatus according to an embodiment of the present invention includes a LED module, a heat sink for emitting heat generated from the LED module, a rectifier for rectifying an input commercial AC power, a transformer including a main coil and an auxiliary coil to transform the rectified power, and an electronic module for biasing a current used to drive the LED module based on the input voltage transported via the auxiliary coil. The lighting apparatus may further include a switching circuit for repeating on and off based on a predetermined frequency and a duty ratio and for adjusting a duty ratio, and a damper part for decreasing the output based on the input voltage automatically.

Here, the electronic module may bias the current to be varied in reverse proportion to an AC input voltage or to heighten a limited value of a voltage used to drive the LED module.

The electronic module biases the current used to driving the LED module based on one of an average of waveforms rectifying the AC input voltage, a peak voltage and a phase angle at which a dimmer controlling dimming of the lighting apparatus is on.

When the AC input voltage is lowered, the lighting apparatus sets and controls the on-time of the switching circuit to be reduced below a range in which interruption of AC line currents is not generated. The damper part connects the power line after the rectifying with the ground to lower the output.

When the AC input voltage is lowered, the lighting apparatus controls the damper part to connect the rectified power line with the ground to lower the output and it controls the switching circuit not to adjust the duty ratio of the one-time.

The duty ratio of the switching circuit is set and controlled for the consumed currents of the LED driving circuit in a low input voltage not to be a lower limit or lower at which the dimmer is driven normally. When the LED at the low input voltage is too bright than a desired value, a bias circuit is added at the output of the LED driving circuit to bias the currents of the LED. Currents are varied in reverse proportion to the AC input voltage at the bias circuit.

The lighting apparatus may be an LED driving apparatus which drives the LED after receiving an input AC voltage to control a total capacity of a smoothing capacitor after rectifying to be 1uF or lower and to control a SW element of the LED driving circuit to be a critical conduction mode (CRM) of a fixed on-time. Because of that, when the AC input voltage is lowered, the control for reducing the on-time of the switching circuit is not performed and a damper circuit configured of resistance and a serial circuit of a capacitor may be connected between the power line after the rectification with the ground.

Alternatively, the lighting apparatus may be an LED driving apparatus which drives the LED by receiving the AC input voltage to control the total capacity of the smoothing capacitor after the rectification to be 1uF or less and to control the SW element of the LED driving circuit to be in the CRM of the fixed on-time. Because of that, when the AC input voltage is lowered, the on-time of the switching circuit is set and controlled to be reduced in a range in which interruption of AC line currents is not generated. In addition, the damper circuit configured of resistance and a serial circuit of a capacitor may be connected with the power line after the rectification and the ground.

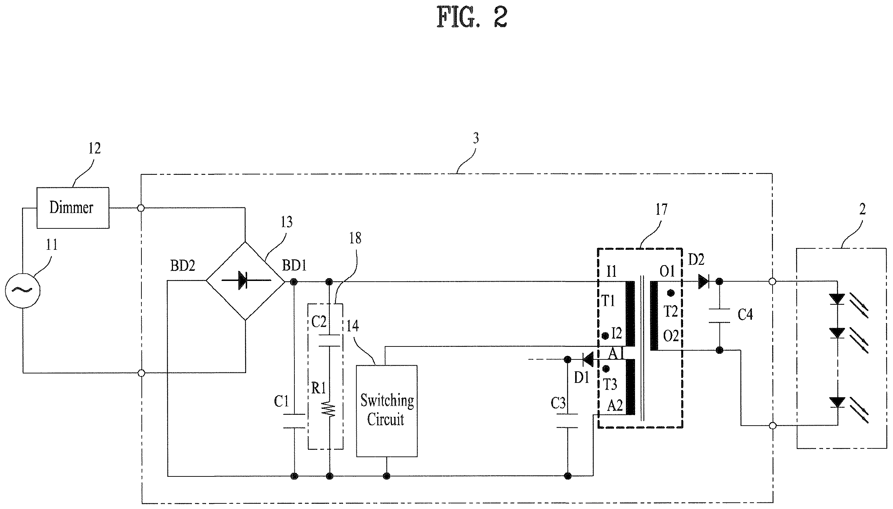

FIG. 2 is a diagram illustrating a lighting system according to an embodiment of the present invention.

In reference to FIG. 2, the lighting system according to the embodiment of the present invention includes a power part 11, a lighting apparatus 2 and 3 and a dimmer 12 for controlling the lighting apparatus 2 and 3.

Here, it is embodied that the lighting apparatus 2 and 3 of the lighting system is connected with the power part 11 supplying the commercial AC power from the external dimmer 12.

As mentioned above, the power part 11 is employed to supply the commercial AC power to the lighting apparatus 2 and 3.

The dimmer 12 controls a conduction phase angle of the commercial AC power supplied by the power part 11 by using TRIAC which is an AC switching element. Because of that, dimming of the LED module 3 is controlled. In other words, when a user operates a controller (not shown) of the dimmer, the dimmer 12 controls the TRIAC based on the operational degree to control the conduction phase angle and an effective voltage of the output is varied by the conduction phase angle.

FIG. 2 illustrates only the LED module 2 and the driving circuit 3 provided in the lighting apparatus 1 shown in FIG. 1 for convenience sake.

As mentioned above, the LED module 2 includes at least one LED chip connected in serial and/or parallel. Here, FIG. 2 illustrates the LED module 2 having the plurality of the LED chips connected in serial.

The driving circuit 3 receives the commercial AC power varied by the conduction phase angle controlled by the dimmer 12 and it supplies a power used to drive the LED module located at a rear terminal.

For that, the driving circuit 3 may include a rectifier 13 and a transformer 17, for example. Here, the driving circuit 3 may further include at least one of a switching circuit 14 and a damper circuit 18, if necessary.

In reference to FIG. 2, each element of the driving circuit 3 and a function of each element will be described in detail.

When the commercial AC power supplied by the power part 11 is controlled firstly and input as mentioned above, the rectifier 13 rectifies the input commercial AC power to convert it into a DC power. At this time, the rectifying may include half-wave rectification and full-wave rectification. Here, the full-wave rectification with better efficiency is embodied.

The DC power rectified from the AC power by the rectifier 13 is input to at least one of a first coil terminal I1 of the transformer 17, a capacitor (C1) and a damper circuit 18.

The transformer 17 may include a first coil (T1) which is an input and a second coil (T2) which is an output, that is, a main coil. The transformer 17 may further include an auxiliary coil, that is, a third coil (T3), if necessary.

The first coil terminal (I2) of the transformer 17 is connected with a minus output terminal (BD2) of the rectifier 13. In this process, the switching circuit 14 is insertedly connected between the first coil terminal (I2) of the transformer 17 and the minus output terminal (BD2) of the rectifier 13.

The switching circuit 14 repeats on/off at a predetermined frequency and a duty ratio and it transmits a power to the transformer.

According to the lighting system shown in FIG. 2 as mentioned above, the switching circuit 14 is provided in the driving circuit of the lighting apparatus. Because of that, flickering generated in the LED module 2 because of the varying input voltage of the dimmer 12 may be reduced.

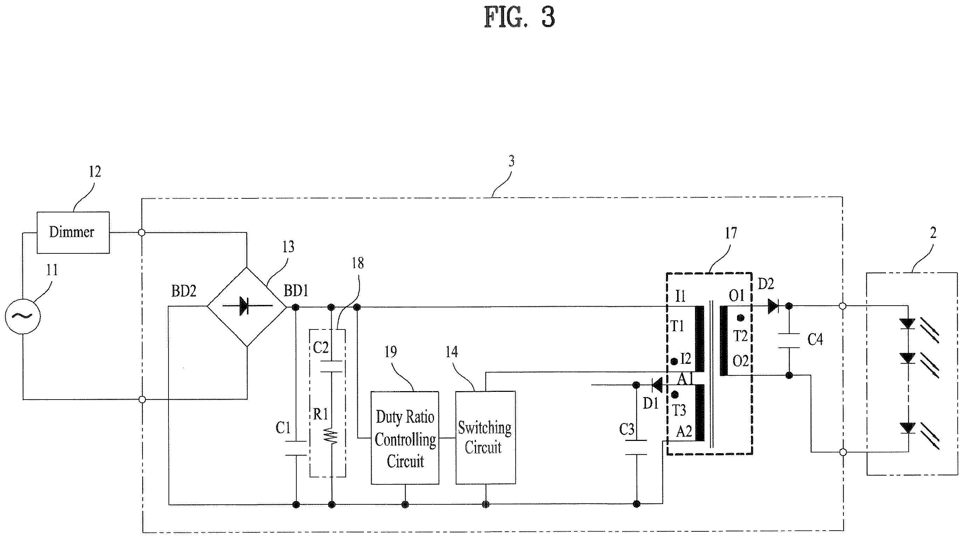

FIG. 3 is a diagram illustrating a lighting system according to another embodiment of the present invention.

Here, when describing the lighting system shown in FIG. 3, the same description of this embodiment has to be referenced to as the description made above in reference to FIG. 2 and different description will be made as follows.

Different from the lighting system shown in FIG. 2, the lighting system shown in FIG. 3 represents a driving circuit 3 further including a duty ratio controlling circuit 19 controlling a duty ratio based on a voltage input after rectified by a rectifier 13.

The duty ratio controlling circuit 19 may be connected between a plus output terminal (BD1) and a minus output terminal (BD2) of a rectifier 13, and it may be located at a front end of a switching circuit 14.

The duty ratio controlling circuit 19 determines whether the voltage input via the rectifier 13 is lowered to a predetermined range or less. When currents of a dimmer 12 are lower too much based on the result of the determination, the duty ratio controlling circuit 19 could be cut-off. Because of that, the duty ratio controlling circuit 19 may control the duty ratio of the voltage input to the rectifier 13 to prevent the cut-off which could be generated by the currents lowered by the dimmer 12.

Like FIG. 2, FIG. 3 represents that the duty ratio controlling circuit 19 is provided in the driving circuit 3, together with the switching circuit 14. In case of the low voltage input via a dimmer 12, the duty ratio of the switching circuit 14 may be set and/or controlled for the currents consumed by the driving circuit of the LED module 2 not to be in a predetermined range or lower of the dimmer 12. The predetermined range refers to a low limit at which the dimmer 12 can be operated normally, for example. This is similar to heightening the duty ratio for minimum currents required by the driving circuit in Pulse Width Modulation (PWM) operation.

As a result, the cut-off generated by lowering the currents of the dimmer 12 too much in case of the low input voltage may be prevented according to the present invention.

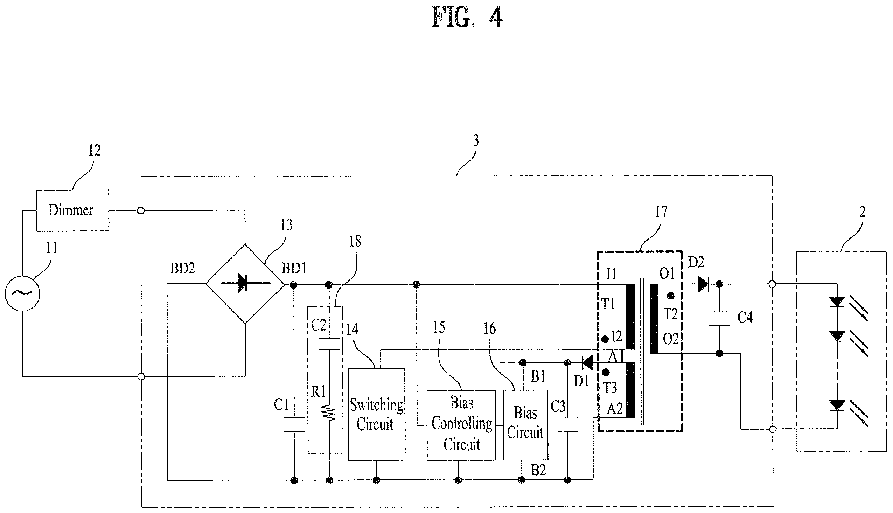

FIG. 4 is a diagram illustrating a lighting system according to a further embodiment of the present invention.

Here, when describing the lighting system shown in FIG. 4, repeated description has to be referenced to the description of FIG. 2 and different description will be made as follows.

Different from the description of FIG. 2, FIG. 4 represents that a driving circuit 3 includes a rectifier 13, a switching circuit 14, a bias controlling circuit 15, bias circuit 16 and a transformer 17, when supplying a power used to drive an LED module 2 located at a rear end by receiving an input commercial AC power varied based on a conduction phase angle controlled by a dimmer 12. Here, the driving circuit 3 may further include a damper circuit 18.

In reference to the accompanying drawings, each part of the driving circuit 3 and a function of each part will be described as follows.

The rectifier 13 receives an input commercial AC power supplied from a power part 11 via a dimmer 12. The rectifier 13 rectifies the input commercial AC power and it converts the commercial AC power into a DC power. At this time, the rectification may be full-wave rectification.

The DC power rectified from the AC power by the rectifier 13 is connected to a first coil terminal (I1) of the transformer 17, a capacitor (C1) and the damper circuit 18.

The transformer 17 includes a first coil (T1) which is an input end, a second coil (T2) which is an output end and a third coil (T3).

The first coil terminal (I2) of the transformer 17 is connected with a minus output terminal (BD2) of the rectifier 13 via the switching circuit 14.

Here, the switching circuit 14 repeats on/off at a predetermined frequency and a predetermined duty ratio and it transmits an electric power to the transformer 17.

The bias controlling part 15 is connected between a plus output terminal (BD1) and the minus output terminal (BD2) of the rectifier 13 and it converts a voltage of the plus output terminal (BD1) of the rectifier 13 into a predetermined voltage which is in proportion to an average, a peak voltage, an ON-phase of the dimmer 12, to output the converted voltage to the bias circuit 16.

The bias circuit 16 rectifies a voltage at a terminal (A1) of the output coil (T3) provided in the transformer 17 at a diode (D1). The bias circuit 16 is connected with a power smoothed by a capacitor (C3) and the minus output terminal (BD2) of the rectifier 13. Because of that, the current of the bias circuit 16 is controlled by the output of the bias controlling circuit 15.

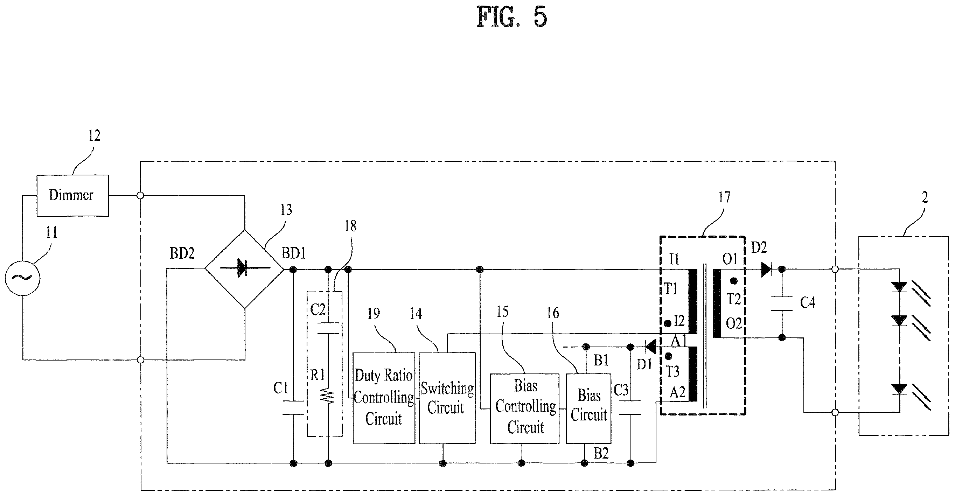

FIG. 5 is a diagram illustrating a lighting system according to a still further embodiment of the present invention.

Here, when describing the lighting system shown in FIG. 5, repeated description has to be referenced to the description of FIGS. 2 through 4 and different description will be made as follows.

A driving circuit 3 of FIG. 5 includes a bias controlling circuit 15, a bias circuit 16 and a duty ratio controlling circuit 19, different from the driving circuit 3 of FIG. 2. The driving circuit 3 includes a bias controlling circuit 15 and a bias circuit 16, different from the driving circuit 3 of FIG. 3. It includes a duty ratio controlling circuit 19, different from the driving circuit 3 of FIG. 4.

In FIGS. 4 and 5, the bias circuit 16 as switching element receives output of the bias controlling circuit 15 at a negative terminal of a diode (D5) and a positive terminal of the diode (D5) is connected with a base of a first transistor (Q1) and a base resistance (R7). A second transistor (Q2) is Darlington-connected with the first transistor (Q1). Because of that, a base current of the first transistor (Q1) is suppressed to be a relatively small value. An emitter of the second transistor (Q2) is connected with a resistance (R8). A current of the bias circuit 15 is determined by the base voltage of the first transistor (Q1), the voltage between the base and emitter of the first transistor (Q1) and the second transistor (Q2), the power voltage output by rectifying and smoothing the third coil (T3) of the transformer 17 and the resist (R8).

When a conduction phase angle of the dimmer 12 is small, an output voltage average of the rectifier 13 is getting small and the base voltage of the first transistor (Q1) is lowered. In contrast, when the conduction phase angle of the dimmer 12 is large, the output voltage average of the rectifier 13 is getting large. Here, the voltage output by rectifying and smoothing the third coil (T3) of the transformer 17 is almost a predetermined value in proportion to a forward voltage of the LED module 2. Because of that, the current of the bias circuit 16 is reduced as the conduction phase angle of the dimmer 12 is increasing. When an output voltage of the bias controlling circuit 15 is the rectified and smoothed voltage of the third coil (T3) provided in the transformer 17 or more, no currents flow at the bias circuit 16.

A terminal (O1) of the second coil (T2) provided in the transformer 17 may be connected with an anode of a diode (D2). At this time, a cathode of the diode (D2) is connected with a capacitor (C4) and a plus terminal of the LED module 2.

A minus terminal of the LED module 2 is connected with a terminal (02) of the second coil (T2) of the transformer 17 and a minus terminal of the capacitor (C4).

When the current of the transformer 17 is cut by off of the switching circuit 14, a magnetic energy stored in a core of the transformer 17 is converted into a current. The current is supplied to the LED module 2 via the diode (D2) of the second coil (T2). Together with that, a voltage determined based on a turns ratio is applied to the third coil (T3) by the current to be supplied to the bias circuit 16 and the capacitor (C3) via a diode (D1). The capacitor (C4) smoothes currents flowing in the LED module 2.

In reference to FIGS. 4 and 5, according to the present invention, the switching circuit 14 is operated in CRM with a fixed on-time and it is operated, without cutting off the switching circuit 14 and lowering the duty ratio even in case of the lower input voltage. Because of that, sufficient currents are flowing to operate the dimmer 12 normally.

Under this condition, the input voltage is low. Because of that, the output voltage of the bias controlling circuit 15 which is an average of the input voltage is lowered than the voltage of the terminal (B1) of the bias circuit 16 which is the rectified and smoothed voltage of the third coil (T3) determined to be almost the forward voltage of the LED module 2. As a result, the current determined by the output of the bias controlling circuit 15 and a potential difference of the terminal (B1) of the bias circuit 15 may be supplied to the bias circuit 16 to be consumed. The power supplied to the LED module 2 is lowered as much as the power consumed by the bias circuit 16 and dimming may be suppressed at a lower voltage region.

The control of the bias controlling circuit 15 and the bias circuit 16 may secure stable operation of the dimmer 12 and set the current of the LED module 2 at the lower voltage region properly.

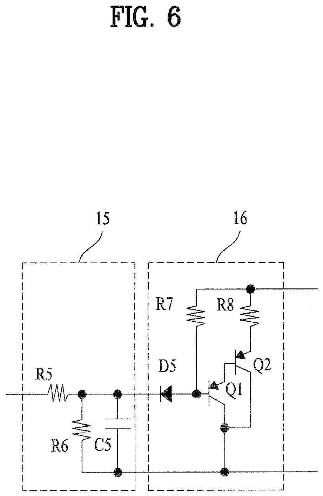

FIG. 6 is a diagram illustrating a detailed circuit configuration of the bias controlling circuit 15 and the bias circuit 16 shown in FIGS. 2 through 5 according to an embodiment.

In reference to FIG. 6, the bias controlling circuit 15 includes a voltage sensing part for dividing the input voltage and a smoothing part for smoothing the divided voltages to an average voltage. For example, the voltage sensing part divides the input voltage into divided circuits including resistive elements (R5 and R6). The smoothing part smoothes the divided voltages to be a capacitor element (C5). The divided voltages may be converted into an average in the smoothing process. The smoothed average voltage is output to the bias circuit 16.

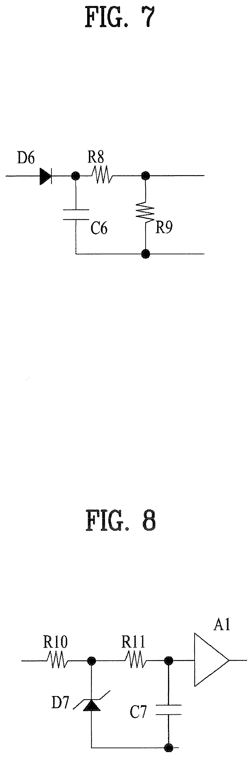

FIG. 7 is a diagram illustrating a circuit configuration of the bias controlling 15 according to another embodiment and FIG. 8 is a diagram illustrating a circuit configuration of the bias controlling circuit 15 according to a further embodiment.

In FIG. 6 described above, the bias controlling circuit 15 is configured to output the voltage in proportion to an average of the voltages output from the rectifier 13.

However, in FIG. 7, the bias controlling circuit 15 may be configured to output a voltage based on a peak voltage of the voltage output from the rectifier 13. In FIG. 8, the bias controlling circuit 15 may be configured to output a voltage in proportion to an on-phase angle of the dimmer 12.

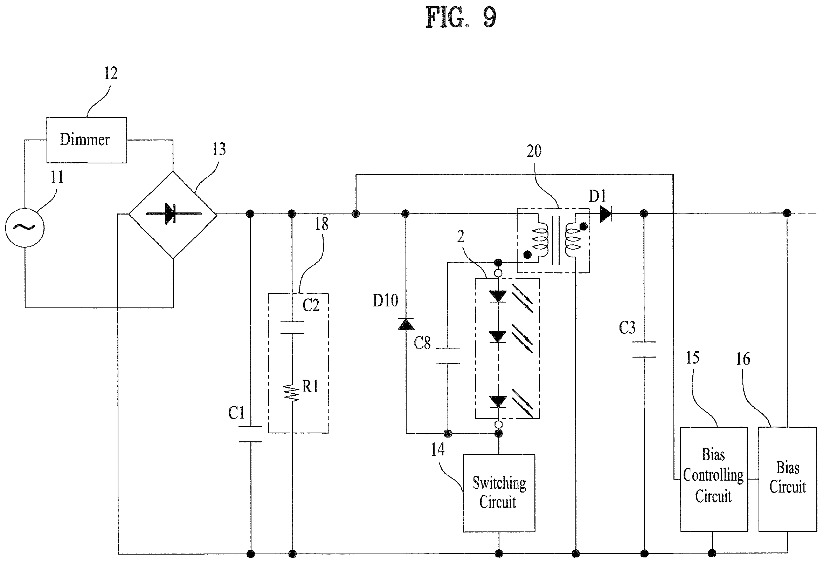

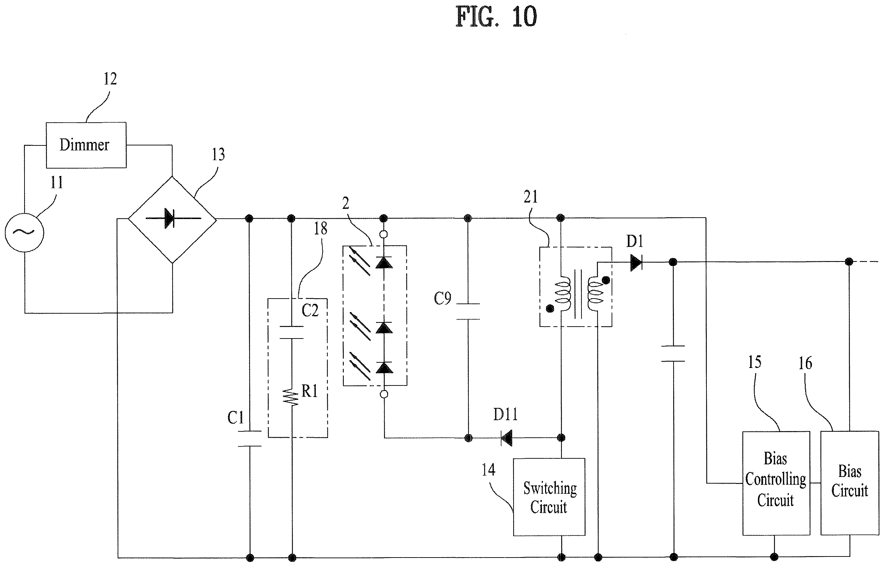

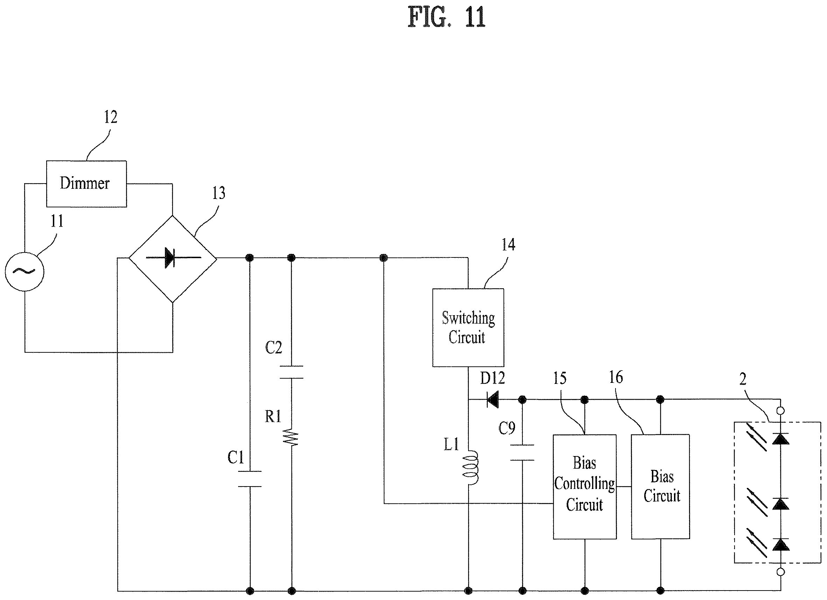

The embodiment of the present invention is realized by embodying a flyback type circuit and the present invention is not limited thereto. The lighting apparatus may be configured based on a buck-type circuit shown in FIG. 9 and a buck-boost type circuit shown in FIGS. 10 and 11.

Especially, the present invention is not limited to this embodiment of the lighting apparatus shown in FIGS. 9 through 11 and the other embodiments of the present invention. The LED module, the transformer, the switching circuit, the bias controlling circuit and the bias circuit may be arranged in the lighting system variously, with various types. As a result, relating circuits, elements and a configuration, type or arrangement of the elements may be various.

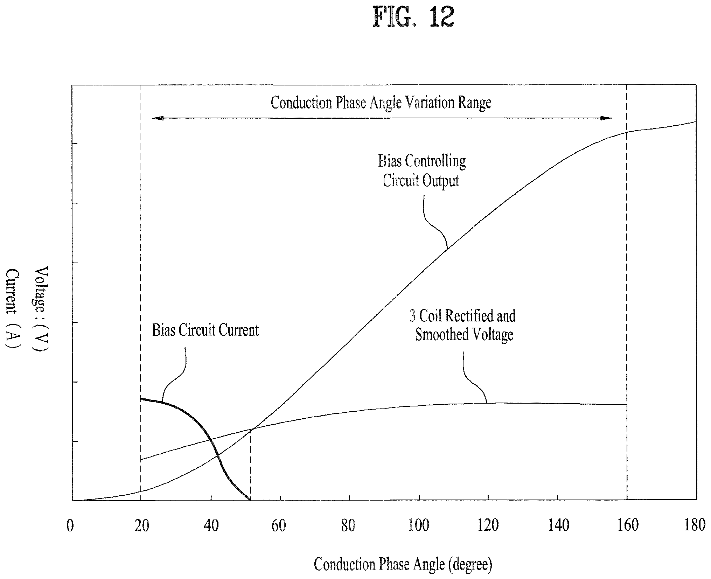

FIG. 12 is a diagram illustrating a relationship among the conduction phase angle of the dimmer 12, the output voltage of the bias controlling circuit 15, the rectified and smoothed voltage of the third coil (T3) provided in the transformer 17 and the current of the bias circuit according to an embodiment of the present invention.

A lighting control method of the lighting system including the dimmer and the lighting apparatus having the LED module includes a step of controlling and outputting a phase of the AC power input via the dimmer, a step of rectifying the output AC power into a DC power, a step of determining whether the input DC power is lowered to be in a predetermined range or lower, a step of transforming the rectified power and biasing a current used to drive the LED module based on the transformed voltage, and a step of irradiating a light by driving the LED module.

Here, the biasing step may bias the bias current to be varied in reverse proportion to the Ac input voltage or to increase a limit value of the driving voltage for the LED module.

The biasing step may use one of the average of waveforms used to rectify the input AC voltage, the peak voltage and the phase angle allowing the dimmer to be on.

The lighting control method may further include a step of adjusting a duty ratio of the rectified power by repeating On/Off at a predetermined frequency and a predetermined duty ratio.

The step of determining whether the AC input voltage is lowered to be in the predetermined range or less may set and control the rectified power to lower the duty ratio in a range generating no interruption of the AC line currents, when the AC input voltage is lowered to be in the predetermined range or less based on the result of the determination.

Alternatively, the step of determining whether the AC input voltage is lowered to be in the predetermined range or less controls the output to be lowered by connecting the power line after the rectification with the ground and it controls the duty ratio of the rectified power not to be adjusted, when the AC input voltage is lowered to be in the determined range or less based on the result of the determination.

A conduction phase angle control range of the dimmer 12 is limited by the used TRIAC element. Generally, the lowest dimming phase of the output voltage is approximately 160 degrees. At this time, a peak value of the output voltage of the rectifier 13 is √2Vsin160deg with respect to an effective voltage (V) of the commercial power. When the commercial power is 100V, the peak value is 48V. In case of the conventional incandescent lamp, an input voltage is low under this condition and the temperature of the filament is lowered to deteriorate light-emitting efficiency. Because of that, the incandescent lamp is on and off quite dark.

In contrast, light-emitting efficiency of the LED is not deteriorated even when the current is lowered. Because of that, even if the power is lowered at the same ratio as the incandescent lamp, a lowering ratio of brightness is relatively small in comparison to the incandescent lamp.

Therefore, as mentioned above, the dimmer is controlled to operate normally in the lighting system having the LED as lighting source according to the present invention. Because of that, the lighting may be controlled by using the dimmer and the flickering generated in the lighting apparatus by the input voltages or power consumption may be reduced. As mentioned above, sufficiency currents to operate the phase control dimmer normally may be flowing at a lower input voltage region according to the present invention. Because of that, the flickering which might be generated in the combining process between the LED lighting apparatus and the phase control dimmer may be reduced or the current bias circuit is controlled to vary the currents in reverse proportion to the input voltages. No bias circuit currents may be flow at the high input voltage region or the non-light irradiating region, to reduce power consumption.

## Claims

1. A lighting apparatus comprising:
a light emitting diode, LED, module (2);
a heat sink configured to emit heat from the LED module (2);
a dimmer (12) configured to control a conduction phase angle of an input alternating current, AC, power input;
a rectifier (13) configured to rectify the input alternating current, AC, power through the dimmer; and
a transformer (17) configured to transform the rectified power, wherein the transformer includes a first coil (T1) which is connected to the rectifier and a second coil (T2) which is connected to the LED module;
**characterized in that** the transformer further includes a third coil (T3) which is connected to an electronic module (16), and
wherein the electronic module (16), which is connected to the transformer (17) between an output port (A1) of the third coil (T3) and a minus output port (BD2) of the rectifier (13), the minus output port (BD2) being also connected to a second output port (A2) of the third coil (T3), is configured to be controlled to bias a current for operating the LED module (2).

2. The lighting apparatus of claim 1, wherein the electronic module biases the current to be varied in reverse proportion to the AC input power.

3. The lighting apparatus of claim 1, wherein the electronic module biases to heighten a limited value of a voltage for operating the LED module in reverse proportion to the input AC power.

4. The lighting apparatus of claim 1, wherein the electronic module biases the current for operating the LED module based on an average of the rectified, AC, power input.

5. The lighting apparatus of claim 1, wherein the electronic module biases the current for operating the LED module based on a peak voltage of the rectified, AC, power input.

6. The lighting apparatus of claim 1, wherein the electronic module biases the current for operating the LED module based on a phase angle at which a dimmer controlling dimming of the lighting apparatus is on.

7. The lighting apparatus of claim 1, further comprising:
a switching circuit (14) connected to the first coil (T1) of the transformer (17) and configured to switch on and off based on a predetermined frequency and a duty ratio ; and
a damper circuit (18) configured to decrease automatically the rectified, AC, power input.

8. A method of controlling a light in a lighting system including a lighting apparatus having a light emitting module (2), LED, and a dimmer (12), the method comprising:
controlling and outputting a conduction phase angle of an alternating input current, AC, power input via the dimmer;
rectifying via a rectifier (13) the alternating input current, AC, power input into a direct current, DC, power;
determining whether the rectified power input is lowered to be in a predetermined range or lower;
transforming the rectified input power;
**characterized by** biasing a current to operate the LED module based on the transformed power; and
radiating a light by operating the LED module,
wherein the step of transforming is performed by a first coil (T1) which is connected to the rectifier and a second coil (T2) which is connected to the LED module (2),
wherein the step of transforming is further performed by a third coil (T3) which is connected to an electronic module (16), and
wherein the electronic module (16), which is connected between an output port (A1) of the third coil and a minus output port (BD2) of the rectifier (13), the minus output port (BD2) being also connected to a second output port (A2) of the third coil (T3), is configured to be controlled to bias a current for operating the LED module (2).

9. The method of claim 8, wherein the biasing step biases the current to be varied in reverse proportion to the AC input power or to increase a limit value of the operating voltage for the LED module.

10. The method of claim 9, wherein the biasing step uses one of the following:
a) the average of the rectified, AC, power input
b) the peak voltage of the rectified, AC, power input
c) the phase angle of the dimmer.

11. The method of claim 10, further comprises adjusting a duty ratio of the rectified power by switching on/off at a predetermined frequency and a predetermined duty ratio a switching circuit (14) connected to the first coil (T1) of the transformer (17).

## Patentansprüche

1. Beleuchtungsvorrichtung, welche aufweist:
ein Leuchtdioden-,LED,modul (2),
einen Kühlkörper, der dafür ausgelegt ist, Wärme vom LED-Modul (2) abzugeben,
einen Dimmer (12), der dafür ausgelegt ist, einen Leitungsphasenwinkel einer Eingangswechselspannung zu steuern,
einen Gleichrichter (13), der dafür ausgelegt ist, die Eingangswechselspannung durch den Dimmer gleichzurichten, und
einen Transformator (17), der dafür ausgelegt ist, die gleichgerichtete Spannung zu transformieren, wobei der Transformator eine erste Spule (T1), die mit dem Gleichrichter verbunden ist, und eine zweite Spule (T2), die mit dem LED-Modul verbunden ist, aufweist,
**dadurch gekennzeichnet, dass** der Transformator ferner eine dritte Spule (T3) aufweist, die mit einem elektronischen Modul (16) verbunden ist, und
wobei das elektronische Modul (16), das zwischen einem Ausgangsanschluss (A1) der dritten Spule (T3) und einem Minus-Ausgangsanschluss (BD2) des Gleichrichters (13) mit dem Transformator (17) verbunden ist, wobei der Minus-Ausgangsanschluss (BD2) auch mit einem zweiten Ausgangsanschluss (A2) der dritten Spule (T3) verbunden ist, dafür ausgelegt ist, gesteuert zu werden, um einen Strom für den Betrieb des LED-Moduls (2) zu verschieben.

2. Beleuchtungsvorrichtung nach Anspruch 1, wobei das elektronische Modul den Strom verschiebt, so dass er umgekehrt proportional zur Eingangswechselspannung geändert wird.

3. Beleuchtungsvorrichtung nach Anspruch 1, wobei das elektronische Modul eine Verschiebung vornimmt, um einen begrenzten Wert einer Spannung für den Betrieb des LED-Moduls umgekehrt proportional zur Eingangswechselspannung zu erhöhen.

4. Beleuchtungsvorrichtung nach Anspruch 1, wobei das elektronische Modul den Strom für den Betrieb des LED-Moduls auf der Grundlage eines Durchschnitts der gleichgerichteten Eingangswechselspannung verschiebt.

5. Beleuchtungsvorrichtung nach Anspruch 1, wobei das elektronische Modul den Strom für den Betrieb des LED-Moduls auf der Grundlage einer Spitzenspannung der gleichgerichteten Eingangswechselspannung verschiebt.

6. Beleuchtungsvorrichtung nach Anspruch 1, wobei das elektronische Modul den Strom für den Betrieb des LED-Moduls auf der Grundlage eines Phasenwinkels verschiebt, bei dem ein Dimmer, der das Dimmen der Beleuchtungsvorrichtung steuert, eingeschaltet ist.

7. Beleuchtungsvorrichtung nach Anspruch 1, welche ferner aufweist:
einen Schaltkreis (14), der mit der ersten Spule (T1) des Transformators (17) verbunden ist und dafür ausgelegt ist, auf der Grundlage einer vorgegebenen Frequenz und eines Einschaltverhältnisses ein- und auszuschalten, und
eine Dämpfungsschaltung (18), die dafür ausgelegt ist, die gleichgerichtete Eingangswechselspannung automatisch zu verringern.

8. Verfahren zum Steuern von Licht in einem Beleuchtungssystem, das eine Beleuchtungsvorrichtung mit einem Leuchtdioden-,LED,modul (2) und einem Dimmer (12) aufweist, wobei das Verfahren aufweist:
Steuern und Ausgeben eines Leitungsphasenwinkels einer Eingangswechselspannung durch den Dimmer,
Gleichrichten der Eingangswechselspannung zu einer Gleichspannung durch einen Gleichrichter (13),
Feststellen, ob die gleichgerichtete Eingangsspannung wenigstens bis in einen vorgegebenen Bereich verringert wurde,
Transformieren der gleichgerichteten Eingangsspannung,
**gekennzeichnet durch** Verschieben eines Stroms für den Betrieb des LED-Moduls auf der Grundlage der transformierten Spannung und
Abstrahlen von Licht durch Betreiben des LED-Moduls,
wobei der Schritt des Transformierens durch eine erste Spule (T1), die mit dem Gleichrichter verbunden ist, und eine zweite Spule (T2), die mit dem LED-Modul (2) verbunden ist, ausgeführt wird,
wobei der Schritt des Transformierens ferner durch eine dritte Spule (T3), die mit einem elektronischen Modul (16) verbunden ist, ausgeführt wird,
und
wobei das elektronische Modul (16), das zwischen einen Ausgangsanschluss (A1) der dritten Spule (T3) und einen Minus-Ausgangsanschluss (BD2) des Gleichrichters (13) geschaltet ist, wobei der Minus-Ausgangsanschluss (BD2) auch mit einem zweiten Ausgangsanschluss (A2) der dritten Spule (T3) verbunden ist, dafür ausgelegt ist, gesteuert zu werden, um einen Strom für den Betrieb des LED-Moduls (2) zu verschieben.

9. Verfahren nach Anspruch 8, wobei beim Verschiebungsschritt der Strom verschoben wird, so dass er umgekehrt proportional zur Eingangswechselspannung geändert wird, oder ein Grenzwert der Betriebsspannung für das LED-Modul erhöht wird.

10. Verfahren nach Anspruch 9, wobei beim Verschiebungsschritt einer der folgenden verwendet wird:
a) der Durchschnitt der gleichgerichteten Eingangswechselspannung,
b) der Spitzenwert der gleichgerichteten Eingangswechselspannung und
c) der Phasenwinkel des Dimmers.

11. Verfahren nach Anspruch 10,
wobei ferner das Einschaltverhältnis der gleichgerichteten Spannung durch Ein-/Ausschalten eines Schaltkreises (14), der mit der ersten Spule (T1) des Transformators (17) verbunden ist, mit einer vorgegebenen Frequenz und einem vorgegebenen Einschaltverhältnis eingestellt wird.

## Revendications

1. Appareil d'éclairage comprenant :
un module de diode électroluminescente, DEL, (2) ;
un dissipateur thermique configuré pour émettre de la chaleur du module DEL (2) ;
un gradateur (12) configuré pour contrôler un angle de phase de conduction d'une énergie d'entrée de courant alternatif, CA ;
un redresseur (13) configuré pour redresser l'énergie d'entrée de courant alternatif, CA, à travers le gradateur ; et
un transformateur (17) configuré pour transformer l'énergie redressée, dans lequel le transformateur inclut un premier enroulement (T1) qui est connecté au redresseur et un deuxième enroulement (T2) qui est connecté au module DEL ;
**caractérisé en ce que** le transformateur inclut en outre un troisième enroulement (T3) qui est connecté à un module électronique (16), et
dans lequel le module électronique (16), qui est connecté au transformateur (17) entre un port de sortie (A1) du troisième enroulement (T3) et un port de sortie moins (BD2) du redresseur (13), le port de sortie moins (BD2) étant également connecté à un second port de sortie (A2) du troisième enroulement (T3), est configuré pour être contrôlé pour polariser un courant pour faire fonctionner le module DEL (2).

2. Appareil d'éclairage selon la revendication 1, dans lequel le module électronique polarise le courant devant être varié d'une manière inversement proportionnelle à l'énergie d'entrée de CA.

3. Appareil d'éclairage selon la revendication 1, dans lequel le module électronique polarise pour augmenter une valeur limitée d'une tension pour faire fonctionner le module DEL d'une manière inversement proportionnelle à l'énergie d'entrée de CA.

4. Appareil d'éclairage selon la revendication 1, dans lequel le module électronique polarise le courant pour faire fonctionner le module DEL sur la base d'une moyenne de l'énergie d'entrée de CA redressée.

5. Appareil d'éclairage selon la revendication 1, dans lequel le module électronique polarise le courant pour faire fonctionner le module DEL sur la base d'une tension de crête de l'énergie d'entrée de CA redressée.

6. Appareil d'éclairage selon la revendication 1, dans lequel le module électronique polarise le courant pour faire fonctionner le module DEL sur la base d'un angle de phase auquel un gradateur contrôlant la variation d'intensité de l'appareil d'éclairage est actif.

7. Appareil d'éclairage selon la revendication 1, comprenant en outre :
un circuit de commutation (14) connecté au premier enroulement (T1) du transformateur (17) et configuré pour mettre en marche et en arrêt sur la base d'une fréquence prédéterminée et d'un facteur de marche ; et
un circuit d'amortissement (18) configuré pour diminuer automatiquement l'énergie d'entrée de CA redressée.

8. Procédé de contrôle d'une lumière d'un système d'éclairage incluant un appareil d'éclairage ayant un module de diode électroluminescente, DEL, (2) et un gradateur (12), le procédé comprenant :
le contrôle et la sortie d'un angle de phase de conduction d'une entrée d'énergie d'entrée de courant alternatif, CA, via le gradateur ;
le redressement via un redresseur (13) de l'énergie d'entrée de courant alternatif, CA, en une énergie de courant continu, CC ;
le fait de déterminer si l'entrée d'énergie redressée est abaissée pour être dans une plage prédéterminée ou plus basse ;
la transformation de l'énergie d'entrée redressée ;
**caractérisé par** la polarisation d'un courant pour faire fonctionner le module DEL sur la base de l'énergie transformée ; et
le rayonnement d'une lumière lors du fonctionnement du module DEL,
dans lequel l'étape de transformation est réalisée par un premier enroulement (T1) qui est connecté au redresseur et par un second enroulement (T2) qui est connecté au module DEL (2),
dans lequel l'étape de transformation est en outre réalisée par un troisième enroulement (T3) qui est connecté à un module électronique (16), et
dans lequel le module électronique (16), qui est connecté entre un port de sortie (A1) du troisième enroulement et un port de sortie moins (BD2) du redresseur (13), le port de sortie moins (BD2) étant également connecté à un second port de sortie (A2) du troisième enroulement (T3), est configuré pour être contrôlé pour polariser un courant pour faire fonctionner le module DEL (2).

9. Procédé selon la revendication 8, dans lequel l'étape de polarisation polarise le courant devant être varié d'une manière inversement proportionnelle à l'énergie d'entrée de CA ou pour augmenter une valeur limite de la tension de fonctionnement pour le module DEL.

10. Procédé selon la revendication 9, dans lequel l'étape de polarisation utilise un de ce qui suit :
a) la moyenne de l'énergie d'entrée de CA redressée
b) la tension de crête de l'énergie d'entrée de CA redressée
c) l'angle de phase du gradateur.

11. Procédé selon la revendication 10, comprenant en outre un ajustement d'un facteur de marche de l'énergie redressée par mise en marche/arrêt à une fréquence prédéterminée et un facteur de marche prédéterminé d'un circuit de commutation (14) connecté au premier enroulement (T1) du transformateur (17).
